# EUROPÄISCHE PATENTSCHRIFT

(11) **EP 0 933 853 B1**
(45) Veröffentlichungstag und Bekanntmachung des Hinweises auf die Patenterteilung: **27.10.2004**
(21) Anmeldenummer: 98117522.7
(22) Anmeldetag: 15.09.1998
(51) Int. Cl.: H02G 3/12

(54) **Träger zur Aufnahme eines Steckdosenblocks auf einem Sockelleistenkanal**
Support for an outlet box flush mounted in a channel
Support de reception d'un bloc-prise pour plinthe de distribution

(30) Priorität: 30.01.1998 FR 9801257
(43) Veröffentlichungstag der Anmeldung: 04.08.1999
(73) Patentinhaber: REHAU AG + Co, 95111 Rehau (DE)
(72) Erfinder: Frey, Bertrand, 57343 Morhange/Cedex (FR); Stengel, Christian, 57343 Morhange/Cedex (FR)

(56) Entgegenhaltungen:
- DE-A- 4 103 957
- DE-U- 7 510 974
- FR-A- 2 709 614

## Beschreibung

Die Erfindung betrifft eine Grenzflächenträger gemäß dem Oberbegriff des Anspruches 1 und ist angesiedelt im Bereich der Verteilung von elektrischer Energie über geradlinige Hohlkörper, die unter den Begriffen Kabelwannen, Minikanäle oder Sockelleistenkanal bekannt sind und in denen elektrische Leiter untergebracht werden, um einen Versorgungsanschluß oder eine Verbindung mit Geräten, Trägerausrüstungen für Elektrogeräte und andere Einrichtungen herzustellen.

Der Gegenstand der Erfindung betrifft einen Bügel, der auf der Rückseite eines Sockelleistenkanals angebracht wird und als Zwischenträger für einen beispielsweise elektrischen Steckdosenblock dienen soll, der an ihm durch Einbau und Aufrastung befestigt wird.

Die Veröffentlichung EP Nr. 0 391 713 auf den Namen BIS B.V. stellt eine Konstruktion dar, die die direkte Montage eines Gehäuses durch Aufrastung auf einem Sockelleistenkanal erlaubt, wobei an diesem Gehäuse eine Steckdose befestigt wird, die mit einer aufgesteckten Blende mit zentraler Öffnung verkleidet ist.

Das Gehäuse ist an sämtlichen Seiten außer der Vorderseite, auf die der Sokkel der Steckdose aufgesetzt wird, geschlossen. Die Durchführung der Kabel erfolgt über die Querflächen des Gehäuses durch vorausgeschnittene Öffnungen.

Unter diesen Bedingungen muß die Abisolierung der Kabel und der Anschluß entweder in dem Gehäuse durchgeführt werden, was nicht sehr bequem ist, oder außerhalb des Gehäuses, indem an den Kabeln gezogen wird, bis eine ausreichende Länge vorhanden ist, die den Anschluß erlaubtÚ

Durch EP Nr. 0 600 109 auf den Namen HERMANN ist ein Grundrahmen für elektrische Steckdosenblöcke bekannt. Die Montage dieses Grundrahmens ist bei großer Bewegungsfreiheit möglich, die sich aus den Schlitzen ergibt, die entlang des Profils des Sockelleistenkanals verlaufen. Der Rahmen kann auf diesem Profil durch Blockierung mit Hilfe der anliegenden Außenblenden in der Bewegung gehindert wer den. Der Grundrahmen besteht im besonderen zunächst aus einem verschiebbaren Unterteil, das in der Mitte eine Öffnung aufweist sowie Längsseiten, die an jene des Sockelleistenkanals angepaßt sind. Ferner weist der Grundrahmen vier Bolzen auf, die als Befestigungsstützen dienen sowie anliegende Stützen zur Befestigung durch Einrasten, die teilweise die Querflächen verschließen.

Der teilweise Verschluß der Querflächen erlaubt nicht Durchführung von Leitergruppen. Hierfür ist die Mittelöffnung des Unterteils vorgesehen, wobei die Leitergruppen durch den Kanal geführt werden, den die Sockelleiste auf ihrer Unterseite bildet.

Demnach sind hier die gleichen Verlegeschwierigkeiten festzustellen wie in der vorausgehenden Erfindung.

Überdies sind die verschiedensten Arten von Steckdosenblöcken bekannt, von den einfachsten bis zu den aktivsten Ausführungen mit selbstabisolierenden Kontakten.

In DE-A-41 03 957 ist ein weiterer gattungsgemäßer Sockelleistenkanal offenbart. Dieser besteht aus einem leistenartigen, auf einer Wand oder dergleichen anbringbaren Unterteile in einem damit lösbar verbindbaren deckelartigen Oberteil. Der Sockelleistenkanal hat Einrichtungen zur Unterbringung elektrischer Installationsgeräte. Es wird vorgeschlagen, auf dem durchlaufenden Unterteil eines Sockelleistenkanals an einer frei wählbaren Stelle einen. Adapter anzubringen, welcher vorzugsweise aufgerastet wird. Es ist daher die Verwendung eines durchlaufenden Unterteils des Sockelleistenkanals möglich. Eine Unterbrechung wie bei bisherigen Ausführungsformen ist nicht erforderlich. Der Adapter kann mittels Verbindungselementen auf dem Unterteil des Sockelleistenkanals verspannt werden. Er nimmt ein bekanntes elektrisches Installationsgerät auf. Bevorzugt besteht der Adapter aus mehreren Teilen, die über eine scharnierartige Verbindung miteinander verbunden sind. Der plattenförmige Bereich des Adapters weist ausbrechbare Wandungen auf, welche bei Bedarf entfernt werden können, so dass durch die dann geschaffenen Öffnungen des plattenförmigen Teils des Adapters Kabel hindurchgeführt werden können, um dann in bekannter Weise mit den Anschlüssen des elektrischen Installationsgerätes verbunden zu werden.

Die vorliegende Erfindung betrifft sämtliche Steckdosenblöcke, die an den erfindungsgemäßen Bügelträger montiert oder eingeführt werden können.

Eine Version eines Steckdosenblocks mit selbstisolierenden Kontakten, der in den erfindungsgemäßen Zwischenträger eingebaut werden kann, ist in der Veröffentlichung von Patent FR Nr. 2 734 413 auf den Namen NOZICK beschrieben.

Dieser Steckdosenblock weist zwei Teile auf, die untereinander durch Einrasten verbunden werden können. Bei der Annäherungs- und Verbindungsbewegung wird die Abisolierung der Kabel sowie ihre Einspannung durch elektrische Kontakte- lemente vollzogen. Diese Gesamtkonstruktion kann in den erfindungsgemäßen Bügelträger eingebaut und in diesem festgehalten werden.

Ein Gegenstand der Erfindung ist es, einen Grenzflächenträger zu erhalten, der auf einen Sockelleistenkanal montiert wird, und dem verschiedene Funktionen zufallen, und zwar nicht nur diejenigen der Aufnahme und Befestigung der Elemente des Stromkreislaufes und des Steckdosenblocks, sondern auch die Funktion eines Trägers, der von den Stromleitern durchlaufen werden kann und von allen Seiten frei zugänglich ist.

Ein weiterer Gegenstand der Erfindung ist ein Grenzflächenträger, der die Möglichkeit einer einfachen und schnellen Montage des Steckdosenblocks bietet sowie eine außergewöhnliche Einfachheit des elektrischen Anschlusses mit maximaler Zugänglichkeit von den Querflächen, d.h. senkrecht auf die Laufrichtung der Kabel stehenden Flächen, wodurch deren leichte Verlegung möglich ist und zwei freie seitliche Zugänge zum zentralen Raum des Trägers vorliegen sowie zwei quasi freie Zugänge über die Längsflächen, was die manuelle Anschlußarbeit erheblich vereinfacht.

Zu diesem Zweck hat die Erfindung einen Grenzflächenträger gemäß den kennzeichnenden Merkmalen des Anspruches 1 zum Inhalt, der auf einen Sockelleistenkanal montiert wird, und zur Aufnahme und Befestigung eines Steckdosenblocks bestimmt ist, der in seiner Mitte einen Raum aufweist, der durch einen doppelten Rahmen eingeschlossen ist, der die Seitenflächen darstellt, während die Querflächen vollkommen frei sind. Die freien Endbindebleche der Schenkel bilden die Rahmen und dienen als Träger zur Beibehaltung und Verriegelung am Sockel der Steckdose.

Gemäß einer weiteren Ausführungsform der Erfindung handelt es sich bei den ersten Hilfsmitteln zur Beibehaltung des Trägers auf dem Sockelleistenkanal, die eine Bewegung in Längsrichtung erlauben, um Hilfsmittel, die mit ineinanderpassenden verschiebbaren Profilen ausgestattet sind, wie z.B. Kanten, die sich auf einer Schiene bewegen lassen, die in den Körper des Sockelleistenkanals eingeformt ist.

Vorteilhafterweise sind unbewegliche Befestigungsmittel vorhanden, d.h. längliche Ösen, in die die Befestigungselemente wie Schrauben und ähnliche eingeführt werden können.

Gemäß dem Hauptmerkmal der Erfindung wird die Montageverbindung zwischen Bügel und Sockel des Steckdosenblocks durch einen doppelten Rahmen hergestellt, der in Form von zwei biegsamen Schenkeln gestaltet ist, auf deren Endbindeblechen der Sockel des Steckdosenblocks durch Aufrasten nach Auseinanderbiegen der beiden Schenkel angebracht wird.

Damit der Bügel verschiebbar ist, werden die Längskanten der Befestigungsplatte, die das Unterteil darstellt, in Form eines Kantenprofils ausgeführt, das die Beibehaitung und Verschiebung entlang komplementärer linearer Strukturen, die die Gleitschiene bilden, erlaubt. Zusätzliche Hilfsmittel ermöglichen die Verriegelung der Befestigungsplatte in der endgültigen Position. Es handelt sich um Befestigungsmittel wie Schrauben oder ähnliche Mittel, die durch die länglichen Ösen hindurchgeführt werden.

Aufgrund der durch das Montagewerkzeug erzeugten Kohäsion kann der Steckdosenblock nicht ohne Zerstörung auseinandergebaut werden.

Um die gewünschten Formen sowie die notwendige Elastizität zu erzielen, wird der Bügel in einem Formgußverfahren durch Kunststoffeinspritzung hergestellt.

Die erfindungsgemäße Montage des Grundrahmens auf dem Sockelleistenkanai erfolgt durch Verschraubung oder vorzugsweise Aufrasten der Befestigungspiatte auf den inneren Längsstrukturen des Sockelleistenkanals. Die Montage des Sockels des Steckdosenblocks am Bügel erfolgt durch einfaches Aufschieben auf die Schenkel des Bügels, die als Aufnahme- und Festhalteträger dienen.

Zur Durchführung der Montage der Steckdose im Falle eines selbstabisolierenden Steckdosenblocks werden die Stromkabel zwischen dem Steckdosensockel und dem Steckeraufnahmeblock eingeschoben. Das Einschieben des Blocks in den Sockel gewährleistet gleichzeitig Abisolierung und Anschluß.

Der Vorgang erweist sich aufgrund des einfachen Zugangs zu den durch den Bügel verlaufenden Kabeln als besonders bequem.

Nachdem die Steckdose angeschlossen ist, braucht nur noch die Gesamtheit des auf den Bügel, der mit dem Sockelleistenkanal den Grenzflächenträger bildet, montierten Steckdosenblocks von vorne aufgesetzt zu werden. Die Steckdose kann aufgrund der Elastizität der Schenkel des doppelten Rahmens aufgesetzt werden und wird durch ein Aufrastelement festgehalten.

Weitere Merkmale und Vorteile der Erfindung sind aus der folgenden Beschreibung zu entnehmen, die als nicht einschränkendes Beispiel dient und sich auf eine Ausführungsvariante bezieht, zu der eine Zeichnung beigelegt ist, in der:
- Abbildung 1 ist eine perspektivische Darstellung, eine sogenannte Explosionszeichnung, die einen Teil des Sockelleistenkanals zeigt, mit dem erfindungsgemäßen Bügel, einem Steckdosenblock mit Sockel und der pyramidalen Blende;
- Abbildung 2 ist eine Draufsicht des erfindungsgemäßen Bügels;
- Abbildung 3 ist ein Querschnitt der Gesamtkonstruktion mit Sockelleistenkanal, Bügel, Steckdosenblock und dessen Blende im zusammengebauten Zustand gemäß einer naheliegenden Variante;
- Abbildung 4 ist eine Mischung zwischen Draufsicht und Querschnitt die innerhalb einer Explosionszeichnung die gleichen Elemente darstellt, wie sie in Abbildung 1 im Falle der naheliegenden Variante gezeigt werden.

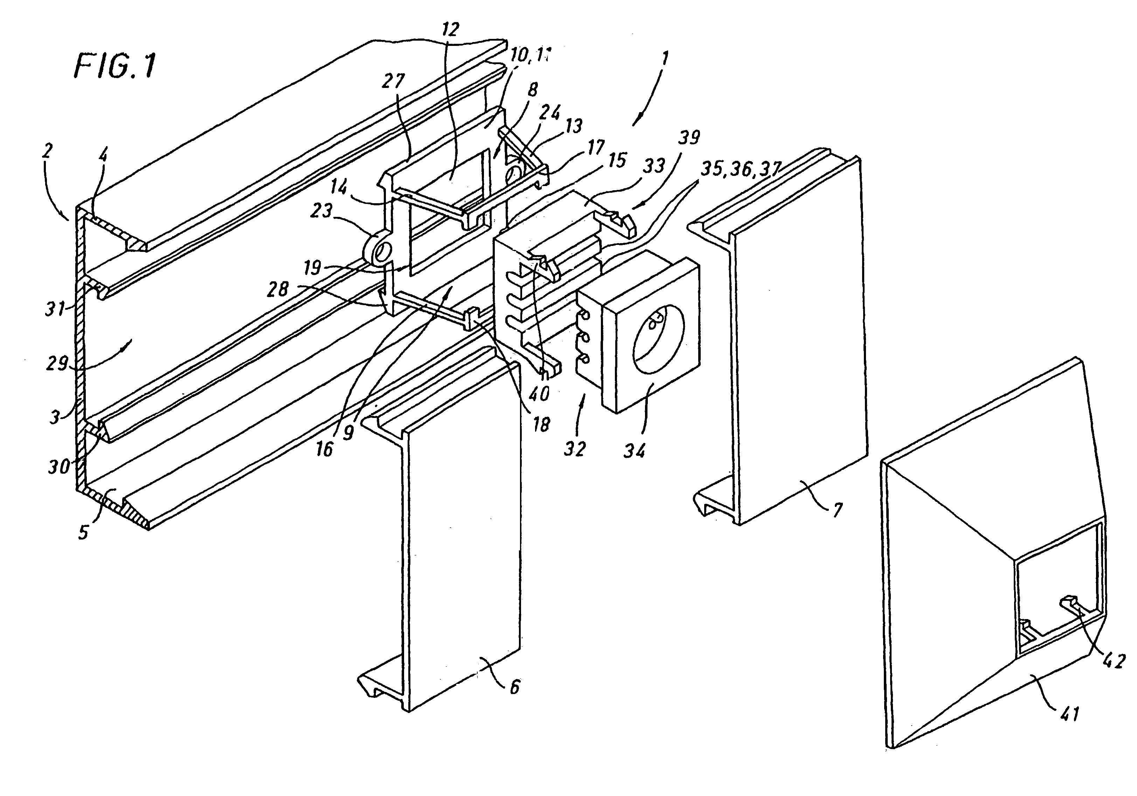

Im Nachfolgenden soll mit Hilfe der verschiedenen Abbildungen der Grenzflächenträger vom erfindungsgemäßen Bügeltyp beschrieben werden, der durch Referenz 1 im ganzen dargestellt wurde. Der Bügel ist dazu bestimmt, auf einem Sockelleistenkanal 2 befestigt zu werden, wie er beispielsweise in Abbildung 1 dargestellt ist Der Sockelleistenkanal besteht aus einem Körper 3, der mehrere innengelegene längsverlaufende Strukturen aufweist, davon obere 4 und untere 5 Arretierungsstrukturen für die Außenblenden 6 und 7.

Der Bügel besteht aus zwei Rahmen 8 und 9, die zwei vorzugsweise zueinander parallel liegende offene Flächen bilden. Diese Rahmen sind im unteren Teil senkrecht durch eine Schwelle 10 in Form einer Befestigungsplatte 11 miteinander verbunden, durch die der Bügel an der Rückwand des Körpers des Sockelleistenkanals befestigt wird. Die Befestigungsplatte 11 weist in ihrer Mitte eine Öffnung 12 auf, einerseits aufgrund der Gewichtsreduzierung und Materialeinsparung, aber auch um eine ausreichende Elastizität der Platine und der Gesamtkonstruktion des Bügels herzustellen.

Die Rahmen 8 und 9 werden jeweils aus zwei aufrechten Schenkeln gebildet, die biegsam sein sollten und beispielsweise geneigt 13, 14 und 15, 16, wobei es sich um konvergente Stützen handelt, die untereinander zu zweien an ihrem oberen Ende durch je ein Endbindeblech 17 und 18 verbunden sind.

Diese Rahmen sind entlang der Längsflächen des Bügels angeordnet, die sie weitestgehend frei lassen aufgrund der dünnen Ausführung der Schenkel, während die Querflächen vollkommen frei bleiben, um einen vollkommen freien Längsdurchgang 19 für die elektrischen Leiter zu schaffen, bei denen es sich beispielsweise um zu Dreiergruppen zusammengefaßte einadrige Leiter wie z.B. 20, 21 und 22 handeln kann. Der Durchgang 19 wird zur Verlegung der Kabel aber auch für das Herausziehen derselben während der Montage der Steckdose und der Ausführung der Anschlüsse benutzt.

Die Befestigungsplatte 11 weist Befestigungs- und Gleitmittel auf.

Bei den Befestigungsmitteln handelt es sich um seitliche Erweiterungen oder Ansätze 23 und 24, die jeweils mit einer länglichen Öffnung 25 und 26 versehen sind, durch die je eine Schraube oder ein ähnliches Element durchgeführt wird. Diese Befestigungsmittel ermöglichen die Blockierung des Bügels in der Endstellung.

Die Schiebestrukturen sind in den Längskanten 27 und 28 der Befestigungsplatte 11 eingeformt, um eine Verschiebung auf und entlang einer in der Mitte gelegenen Längsstruktur in Form einer Schiene 29 zu gewährleisten, die beispielsweise aus 2 gegenüberliegenden Kanten 30 und 31 besteht.

Die Hauptfunktion des Bügels ist es, einen Grenzflächenträger zwischen dem Sockelleistenkanal und einem elektrischen Steckdosenblock 32 zu bilden. Diesen nimmt er durch Schnellverbindungselemente auf, die beispielsweise eine Aufrastfunktion aufweisen und eine etwaige zerstörfreie Demontage ermöglichen.

Bei dem Steckdosenblock kann es sich um die verschiedensten Typen vom einfachsten Block bis zum selbstabisolierenden Block handeln, wie in Abbildung 1 dargestellt, der im folgenden zusammenfassend beschrieben werden soll.

Hierbei handelt es sich um einen Steckdosenblock, der aus zwei verschiedenen Teilen zusammengesetzt wird, die sich mit Hilfe eines Werkzeugs wie z.B. einer Zange verbinden lassen. Man unterscheidet einen unteren Teil oder Sockel 33 und einen oberen Teil oder Gehäuse 34. Der untere Teil oder Sockel 33 enthält eine Vielzahl von parallel laufenden Kanälen wie 35, 36, 37 auf deren Boden Leiterdrähte verlaufen, die durch nach unten geneigte Haken 38 in dieser Position gehalten werden. Der Sockel enthält vier aufrechte Stützen wie 39, die jeweils am Ende eine elastische Riegelstruktur aufweisen wie 40 und an den Endbindeblechen des Bügels 1 im Hinblick auf eine Blockierung der Verbindung unbeweglich verankert werden.

Gehäuse 34 ist ein Abschlußteil, das zur Abdeckung von Sockel 33 dient. Es enthält auf seiner Unterseite eine angepaßte Struktur zur Abisolierung und Anschluß während der Verbindung der beiden Teile mit Hilfe eines Spezialwerkzeugs.

Der Steckdosenblock 32 wird durch eine pyramidale Blende 41 geschützt und verblendet, die von zwei Einrasthaken wie 42 gehalten wird. Sie enthält an ihrer Unterseite die Haltestrukturen der Schenkel des Bügels wie nachstehend dargestellt.

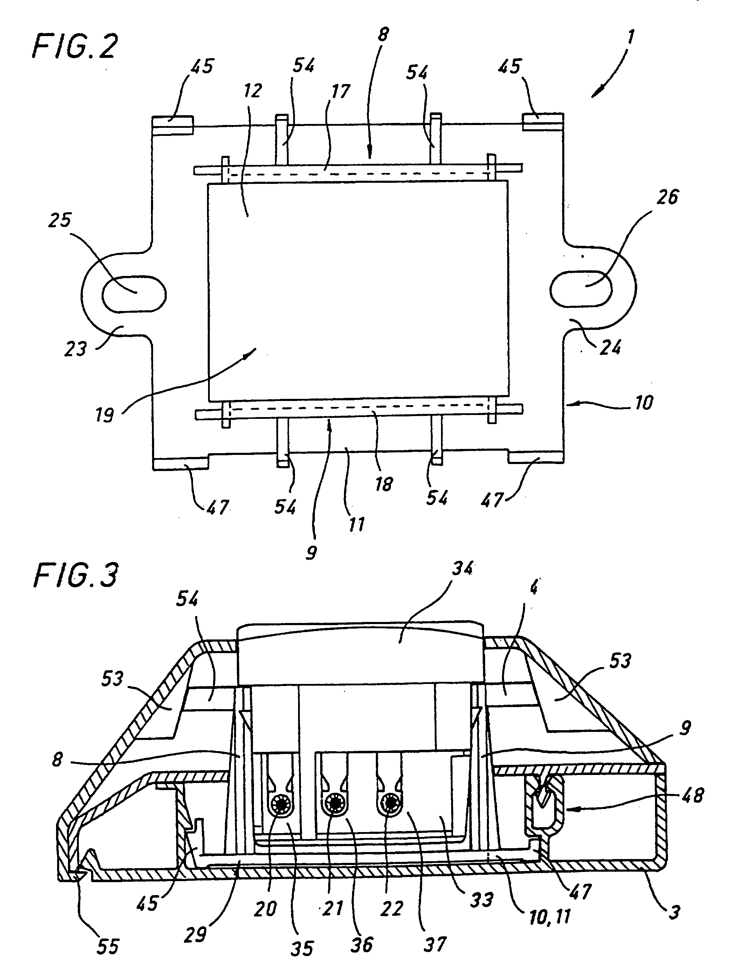

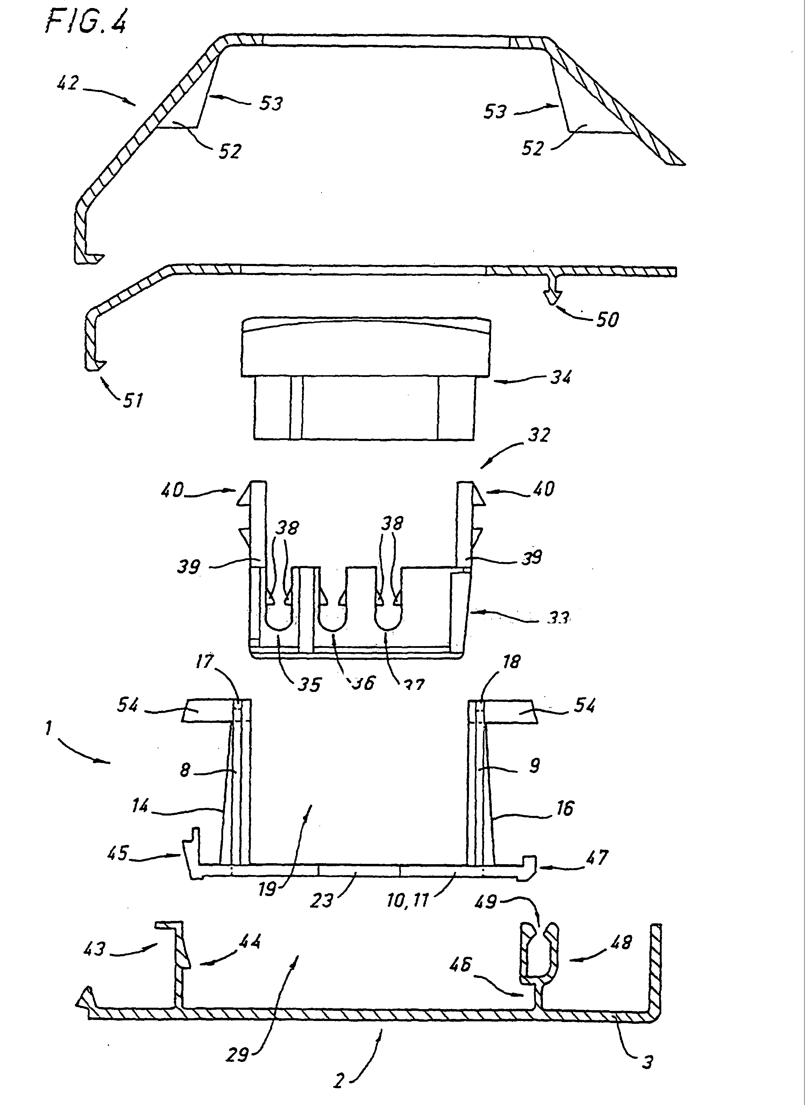

Eine naheliegende Variante ist in den Abbildungen 2, 3 und 4 dargestellt. Sie unterscheidet sich nur leicht von derjenigen, die in Abbildung 1 zu sehen ist.

Die naheliegende Variante unterscheidet sich in den technischen Realisierungsformen der Schiene 29, den Strukturen der Endbindebleche der Befestigungsplatte und der Blende.

Zentralschiene 29 weist eine spezielle Profilform auf, die auf einer Seite von einem umgekehrten L-Profil 43 begrenzt ist, das mit einer linearen Blockierungseinkerbung 44 versehen ist, die mit Profil-Anschlägen zusammenwirkt wie 45, die in die Ecken einer der Kanten eingeformt sind, wie z.B. in die obere Kante der Befestigungsplatte 11, wobei diese Ecken als Kufen für die Verschiebung entlang des L-Profils 43 dienen. Schiene 29 ist auf der anderen Seite durch eine Rille 46 begrenzt, in der zwei weitere Kufen laufen wie 47, die in die Ecken der anderen Kante der Befestigungsplatte 11 eingeformt sind. Diese Kufen 47 haben beispielsweise einen rechtwinkligen Querschnitt, der an das Profil der Rille 46 angepaßt ist. Diese Rille wird begrenzt durch den Bolzen und die Wulst eines Halteprofils, dessen Querschnitt ab oberen Ende in einem Längsschlitz 49 mit zwei Innenlippen die Form einer Tulpe 48 hat, wobei in diesem Längsschlitz die beiden Ansätze 50 mit Pfeilende blockieren, die dazu bestimmt sind, zusätzlich zu der als Hakenkanter 51 geformten Kantvorrichtung die Abdeckung oder die anliegende Außenblende auf dem Körper des Sockelleistenkanals zu halten.

Blende 41, die den Steckdosenblock 32 schützt und verblendet, weist auf der Unterseite und auf jeder Seite eine Verstärkungsstruktur wie 52 auf, die eine Dreiecksform hat, deren große freien Seiten 53 jeweils eine längliche Stützrampe auf Querstrukturen mit Klappfunktion wie 54 und einer geneigten Endkante bilden, die an den Enden mit den biegsamen Schenkeln der Rahmen 8 und 9 versehen sind, um deren zufällige Abstandsbewegung zu verhindern, die zur gefährlichen Lösung der Riegel 40 führen könnte, die das Gehäuse 34 des Steckdosenblocks hatten, die auf dem erfindungsgemäßen Grenzflächenträger 1 montiert sind.

Die Blende 41 wird bei dieser Variante von einer untengelegenen Kantvorrichtung in Form eines Hakenkanters 55 gehalten.

Bei der Montage wird zunächst die Befestigungsplatte 11 in die Zentralschiene 29 eingeführt, was durch die Elastizität des Materials sowie durch die Biegsamkeit möglich ist, die durch die Öffnung 12 erzeugt wird. Sobald der Bügel, der den Steckdosenblock trägt, in der Endposition montiert ist, nachdem er entlang der Zentralschiene angeordnet und ausgerichtet wurde, erfolgt die Befestigung durch Bohren und Verschrauben durch die länglichen Öffnungen 25, 26 der Ansätze.

Die Kabel werden angezogen, bis der Sockel 33 unter der Kabelschicht hindurchpaßt und mit Hilfe eines Spezialwerkzeugs wird der obere Teil 34 der Steckdose am Sockel befestigt, wobei während dieser Bewegung Abisolierung und Anschluß quasi gleichzeitig erfolgen.

Die Arbeit wird durch Anbringung einer Blende. z.B. der Pyramidalblende 41, die in Abbildung 1 dargestellt ist, durch einfaches Aufrasten wie bei den Außenblen den 6 und 7 beendet.

Durch das verwendete Material verfügen die Teile über eine ausreichende Biegsamkeit, um bei der Verbindung durch Aufrasten nach Innen gebogen werden zu können; aber auch die Lösung der Teile voneinander ist so möglich.

Das große Interesse dieser Erfindung betrifft die Doppelrahmenstruktur, durch die ein Längsdurchgang für die Kabel sowie offene Seitenflächen durch die dünnen Schenkel geschaffen werden, aus denen die Rahmen bestehen. Auf diese Weise ist ein freier Zugang zum zentralen Innenraum des Bügels möglich, wodurch eine außergewöhnlich einfache Montage gewährleistet ist.

Die vorliegende Erfindung wurde unter Bezugnahme auf eine der bevorzugten Realisierungsformen beschrieben und erklärt, bei Ansicht der Abbildung wird indessen offensichtlich, daß diese Realisierungsform nur als Beispiel angegeben wurde und dadurch der Schutzbereich nicht eingeschränkt werden soll.

## Patentansprüche

1. Grenzflächenträger, (1) zur Aufnahme und Befestigung eines elektrischen Steckdosenblocks (32) auf einem Sockelleistenkanal (2), der ein montiertes Unterteil enthält, das entlang einer Schiene (29) gleitet, die in die Wand des Sockelleistenkanals (2) eingeformt ist, dass das Unterteil eine Befestigungsplatte (11) ist, die in der Mitte eine Öffnung (12) aufweist und die in einer beliebigen Endstellung entlang der Schiene (29) unbeweglich ist, **dadurch gekennzeichnet, dass** zwei Rahmen (8, 9) fest mit dem Grundflächenträger (1) verbunden sind und zur Fläche der Befestigungsplatte (11) senkrecht stehen, wobei sie die Längsseitenflächen des Grenzflächenträger (1) bilden und die Querflächen völlig frei bleiben, wobei diese Längsseitenflächen zwischen den Querflächen einen Längsdurchgang (19) begrenzen, um die elektrischen Leiter an den Steckdosenblock (32) anschließen zu können.

2. Grenzflächenträger nach Anspruch 1, **dadurch gekennzeichnet, dass** es sich bei den Bestandteilen der Rahmen (8, 9) um aufrechte Schenkel handelt (13 bis 19) die im unteren Bereich über die Fläche der Befestigungsplatte (11) und im oberen Bereich über ein Endbindeblech (17, 18) miteinander verbunden sind.

3. Grenzflächenträger nach einem der vorhergehenden Ansprüche, **dadurch gekennzeichnet, dass** die aufrechten Schenkel (13 bis 19) der Rahmen (8, 9) sehr dünn sind.

4. Grenzflächenträger nach Anspruch 2 oder 3, **dadurch gekennzeichnet, dass** die aufrechten Schenkel (13 bis 19) der Rahmen (8, 9) biegsam sind.

5. Grenzflächenträger nach Anspruch 2 bis 4, **dadurch gekennzeichnet, dass** die aufrechten Schenkel (13 bis 19) der Rahmen (8, 9) zueinander geneigt sind, zusammenlaufen und nach oben führen.

6. Grenzflächenträger nach einem der vorhergehenden Ansprüche, **dadurch gekennzeichnet, dass** die Endbindebleche (17, 18) der aufrechten Schenkel (13 bis 19) der Rahmen (8, 9) die Aufnahmeelemente der Hilfsmittel zur Verbindung mit dem Körper (3) des elektrischen Steckdosenblockes (32) darstellen.

7. Grenzflächenträger nach einem der vorhergehenden Ansprüche, **dadurch gekennzeichnet, dass** es sich bei den Hilfsmitteln zur Verbindung mit dem Körper des Steckdosenblockes (32) um Riegelstrukturen (40) mit Aufrastfunktion handelt, die sich am Ende der biegsamen, aufrechten Stützen (39) des Unterteils (33) befinden und dadurch an den Endbindeblechen (17, 18) der Rahmen (8, 9) festgemacht sind.

8. Grenzflächenträger nach einem der vorhergehenden Ansprüche, **dadurch gekennzeichnet, dass** die Endbindebleche (17, 18) der aufrechten Schenkel (13 bis 19) der Rahmen (8, 9) Querstrukturen mit Klappfunktion (54) aufweisen, die mit den Stützen eines Aufsatzteils dahingehend zusammenwirken, dass jegliche Abstandsbewegung der biegsamen Stützen (39) des Unterteils (33) des Steckdosenblocks (32) verhindert und so das Öffnen der Riegelstrukturen (40) durch Beibehaltung im Grenzflächenträger vermieden ist.

9. Grenzflächenträger nach einem der vorhergehenden Ansprüche, **dadurch gekennzeichnet, dass** es sich bei dem Aufsatzteil um eine Blende (41) handelt, die an der Unterseite Verstärkungen (52) aufweist, die eine Dreiecksform haben, deren freie Schrägseite (53) eine schräge Stütz- und Konvergenzrampe an den Querstrukturen (54) der Endbindebleche (17, 18) der aufrechten Schenkel (13 bis 19) der Rahmen (8, 9) im Hinblick darauf bildet, die Abstandsbewegung zu stoppen.

## Claims

1. Boundary surface support (1) for holding and mounting an electrical plug socket block (32) on a skirting trunking (2) which contains an installed lower part which slides along a rail (29) which is formed in the wall of the skirting trunking (2), in that the lower part is a mounting plate (11) which has an opening (12) in the centre and cannot move along the rail (29) when it is in any given end position, **characterized in that** two frames (8, 9) are firmly connected to the base surface support (1) and are at right angles to the surface of the mounting plate (11), in which case these two frames (8, 9) form the longitudinal side surfaces of the boundary surface support (1) and the transverse surfaces remain completely free, in which case these longitudinal side surfaces bound a longitudinal aperture (19) between the transverse surfaces, in order to make it possible to connect the electrical conductors to the plug socket block (32).

2. Boundary surface support according to Claim 1, **characterized in that** the components of the frames (8, 9) are vertical limbs (13 to 19), which are connected to one another in the lower area via the surface of the mounting plate (11), and in the upper area via an end connecting plate (17, 18).

3. Boundary surface support according to one of the preceding claims, **characterized in that** the vertical limbs (13 to 19) of the frames (8, 9) are very thin.

4. Boundary surface support according to Claim 2 or 3, **characterized in that** the vertical limbs (13 to 19) of the frames (8, 9) are flexible.

5. Boundary surface support according to Claims 2 to 4, **characterized in that** the vertical limbs (13 to 19) of the frames (8, 9) are inclined with respect to one another, run together and lead upwards.

6. Boundary surface support according to one of the preceding claims, **characterized in that** the end connecting plates (17, 18) of the vertical limbs (13 to 19) of the frames (8, 9) represent the holding elements of the aids for connection to the body (3) of the electrical plug socket block (32).

7. Boundary surface support according to one of the preceding claims, **characterized in that** the aids for connection to the body of the plug socket block (32) are bolt structures (40) with a latching function, which are located at the end of the flexible, vertical supports (39) of the lower part (33) and are thus fixed to the end connecting plates (17, 18) of the frames (8, 9).

8. Boundary surface support according to one of the preceding claims, **characterized in that** the end connecting plates (17, 18) of the vertical limbs (13 to 19) of the frames (8, 9) have transverse structures with a folding function (54), which interact with the supports of an attachment part such that any separation movement of the flexible supports (39) of the lower part (33) of the plug socket block (32) is prevented, thus avoiding the bolt structures (40) being opened by being held in the boundary surface support.

9. Boundary surface support according to one of the preceding claims, **characterized in that** the attachment part is a panel (41), which has reinforcements (52) on the lower face, which have a triangular shape and whose free inclined face (53) forms an oblique supporting and convergence ramp on the transverse structures (54) of the end connecting plates (17, 18) of the vertical limbs (13 to 19) of the frames (8, 9), in order to stop the separation movement.

## Revendications

1. Support d'interface (1) destiné à recevoir et à fixer un bloc de prise électrique (32) sur un conduit de plinthe (2) qui comprend une partie inférieure montée, laquelle coulisse le long d'un rail (29) qui est façonné dans la paroi du conduit de plinthe (2), que la partie inférieure est une plaque de fixation (11) qui présente en son centre un orifice (12) et qui est immobilisée dans une position finale quelconque le long du rail (29), **caractérisé en ce que** deux cadres (8, 9) sont fixés à demeure avec le support de surface de base (1) et sont perpendiculaires à la surface de la plaque de fixation (11) en formant ainsi les surfaces latérales longitudinales du support d'interface (1) et les surfaces transversales demeurant entièrement libres, ces surfaces latérales longitudinales délimitant un passage longitudinal (19) entre les surfaces transversales afin de pouvoir raccorder les conducteurs électriques au bloc de prise (32).

2. Support d'interface selon la revendication 1, **caractérisé en ce que** les composants des cadres (8, 9) sont des montants verticaux (13 à 19) qui sont reliés entre eux par la surface de la plaque de fixation (11) dans la zone inférieure et par une tôle de terminaison (17, 18) dans la zone supérieure.

3. Support d'interface selon l'une des revendications précédentes, **caractérisé en ce que** les montants verticaux (13 à 19) des cadres (8, 9) sont très minces.

4. Support d'interface selon la revendication 2 ou 3, **caractérisé en ce que** les montants verticaux (13 à 19) des cadres (8, 9) sont flexibles.

5. Support d'interface selon la revendication 2 à 4, **caractérisé en ce que** les montants verticaux (13 à 19) des cadres (8, 9) sont inclinés les uns vers les autres, convergent et s'étendent vers le haut.

6. Support d'interface selon l'une des revendications précédentes, **caractérisé en ce que** les tôles de terminaison (17, 18) des montants verticaux (13 à 19) des cadres (8, 9) constituent les éléments d'accueil des moyens auxiliaires destinés à la liaison avec le corps (3) du bloc de prise électrique (32).

7. Support d'interface selon l'une des revendications précédentes, **caractérisé en ce que** les moyens auxiliaires destinés à la liaison avec le corps du bloc de prise électrique (32) sont des structures de verrouillage (40) avec fonction d'encliquetage qui se trouvent à l'extrémité des étais flexibles verticaux (39) de la partie inférieure (33) et sont ainsi fixées au niveau des tôles de terminaison (17, 18) des cadres (8, 9).

8. Support d'interface selon l'une des revendications précédentes, **caractérisé en ce que** les tôles de terminaison (17, 18) des montants verticaux (13 à 19) des cadres (8, 9) présentent des structures transversales avec fonction de rabat (54) qui agissent conjointement avec les étais d'une pièce rapportée de sorte que tout mouvement d'espacement des étais flexibles (39) de la partie inférieure (33) du bloc de prise (32) soit empêché et que l'ouverture des structures de verrouillage (40) soit ainsi évitée par un maintien dans le support d'interface.

9. Support d'interface selon l'une des revendications précédentes, **caractérisé en ce que** la pièce rapportée est un cache (41) qui présente sur son côté inférieur des renforts (52) de forme triangulaire dont le côté incliné libre (53) forme une rampe d'appui et de convergence inclinée au niveau des structures transversales (54) des tôles de terminaison (17, 18) des montants verticaux (13 à 19) des cadres (8, 9) en vue d'arrêter le mouvement d'espacement.
